(19) Europäisches Patentamt
European Patent Office
Office européen des brevets

(11) Publication number: **0 449 312 A2**

(12) # EUROPEAN PATENT APPLICATION

(21) Application number: **91105074.8**

(51) Int. Cl.$^5$: **C04B 35/54**

(22) Date of filing: **28.03.91**

(30) Priority: **29.03.90 JP 82404/90**

(43) Date of publication of application:
**02.10.91 Bulletin 91/40**

(84) Designated Contracting States:
**DE FR GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Watanabe, Kazuhiro**
**Guriin Hiru Mita 5-202, 5-1-3, Mita**
**Tama-ku, Kawasaki(JP)**
Inventor: **Murakami, Mutsuaki**
**1-18-23, Miwa Midoriyama**
**Machida-shi, Tokyo(JP)**

(74) Representative: **Bühling, Gerhard, Dipl.-Chem. et al**
**Patentanwaltsbüro Tiedtke-Bühling-Kinne Grupe-Pellmann-Grams Bavariaring 4**
**W-8000 München 2(DE)**

(54) **Process for preparing a graphite film or block from polyamido acid films.**

(57) A process for preparing a graphite sheet or block is described. The process comprises providing a film of a polyamido acid, subjecting the polyamido acid to polyimidization, stretching the film prior to or during the polyimidization, and thermally treating the resultant polyimide film under conditions sufficient for graphitization. When a plurality of the polyimide films are thermally treated for graphitization, a graphite block having a good rocking characteristic is obtained.

EP 0 449 312 A2

## BACKGROUND OF THE INVENTION

### Field of The Invention

This invention relates to a process for preparing graphite in the form of a film or block which is utilizable in various fields of heating elements, structural materials, heat-insulating materials, heat-resistant materials, corrosion-resistant sealing materials, X-ray elements, and neutron ray elements.

### Description of The Prior Art

Since graphite has high resistances to heat and chemicals and high electric conductivity, it is very important as an industrial material. In fact, graphite has wide utility in the fields of electrodes, heating elements, structural materials, and the like. In addition, single crystal graphite has been employed as optical elements for X-rays and neutron rays.

Natural graphite may be used for the above purpose but natural graphite of good quality is obtained only in very limited amounts of production. Natural graphite is usually available in the form of powders or blocks which are difficult to handle. Accordingly, artificial graphite has been produced instead.

One of processes for preparing artificial graphite is one wherein graphite is obtained by deposition from Fe, Ni/C melts, by decomposition of carbides of Si, Al and the like, or by cooling of a carbon solution under high temperature and high pressure conditions. The resultant graphite is called kish graphite and has substantially the same physical properties as natural graphite. However, the process can provide graphite only in the form of thin flakes or fine pieces. Moreover, the preparation process is complicated with high production costs. Accordingly, this process has scarcely been utilized industrially.

Another process for obtained artificial graphite is a process wherein hydrocarbon gases are pyrolized and deposited with graphite and hot processed. More particularly, the gas is re-annealed over a long term at 3400 °C while applying a pressure. The resultant graphite is called highly oriented pyrolytic graphite (HOPG) and has substantially the same characteristics as natural graphite. In this process, a larger size of graphite can be obtained than in the first process. However, the production process is complicated with a poor yield. Thus, the product costs become very high.

Among ordinary processes for preparing carbon materials, there is a process wherein organic materials or carbonaceous materials are heated at temperatures not lower than 3000 °C. In this process, there are obtained those structures including a structure very close to the graphite structure and a structure which is far away from the graphite. In order to obtain a graphite film or block by the process, film or block-shaped organic materials have to be used as a starting material. For this purpose, polymeric or high molecular weight materials are used. In particular, polymeric materials are thermally treated in vacuum or in an inert gas for conversion into a carbonaceous material through decomposition and polymerization reactions. The carbonaceous material is further thermally treated at higher temperatures to graphitize. However, there are only a few polymer materials capable of conversion into a high degree of graphitization. For instance, when phenol-formaldehyde resins, polypara-phenylene oxide and polyvinyl chloride are thermally treated at 3000 °C, graphitization does not proceed. These polymers belong to hard-to-graphitize materials and a high degree of graphitization is not attained.

We made studies on a variety of polymer materials, among which aromatic polyamides (PA), polyoxadiazoles (POD), aromatic polyimides (PI), polybenzoimidazoles and the like were found to be readily graphitized when thermally treated in a specific temperature range (Japanese Kokai Nos. 61-275114, 61-275115 and 61-275117).

Moreover, it has been also found that when films of polymer materials are built up and subjected to hot pressing, a graphite block suitable for a radiation optical element is obtained (Japanese Kokai Nos. 02-44020 and 01-56364 and Japanese Patent Application No. 63-235217).

## SUMMARY OF THE INVENTION

It is an object of the invention to provide a process for preparing graphite with good properties from a specific type of polymer material in an easy way.

It is another object of the invention to provide a process for preparing graphite which is suitable for a radiation optical element.

The above objects can be achieved, according to the invention, by a process for preparing graphite which comprises providing a film of a polyamido acid, subjecting the polyamido acid to polyimidization, stretching the film before completion of the polyimidization, and thermally treating the resultant polyimide

film under conditions sufficient for graphitization.

With aromatic polyimides, when films of aromatic polyamido acids which are a precursor of the polyimides are stretched and then subjected to polyimidization and graphitization, the graphitization reaction is pronouncedly promoted. It will be noted that when the film of an aromatic polyamido acid which has been once imidized is stretched, the graphitization is not so facilitated. In other words, the facilitation effect is developed when the film is stretched during the course of conversion of the polyamido acid to polyimide or prior to the conversion. The facilitation of the graphitization by stretching of the film is assumed as follows: when the film is stretched prior to or during the conversion reaction of from polyamido acid to polyimide, the crystallinity of the polyimide film is significantly improved.

In the practice of the invention, a plurality of the polyimide films obtained after the stretching may be built up and hot pressed, thereby obtaining a graphite block with a desired thickness.

## DETAILED DESCRIPTION AND EMBODIMENTS OF THE INVENTION

The starting polyamido acids used in the process should preferably be aromatic polyamido acids. Preferable polyamido acids or polyimides are prepared by reaction between acid anhydrides and diamines according to the following reaction sequence.

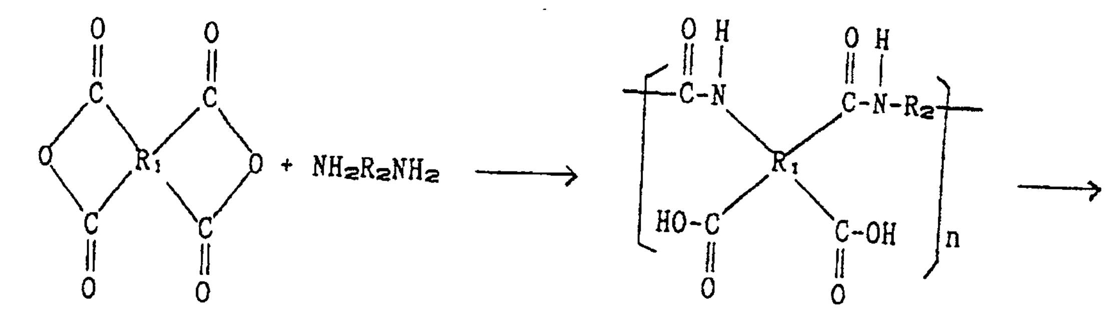

(II)

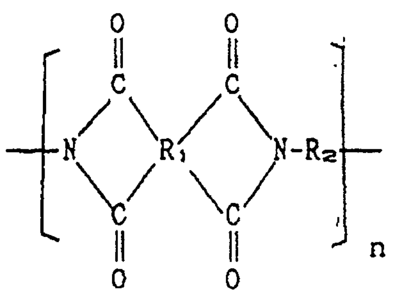

(III)

wherein $R_1$ represents 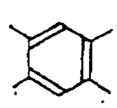, 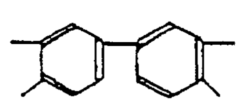, 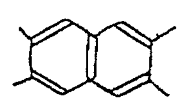 or

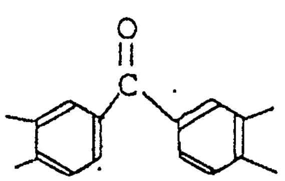,

$R_2$ represents 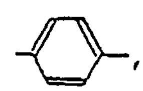, 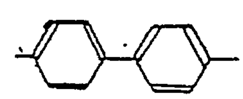,

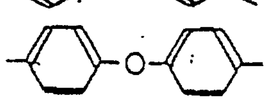 or 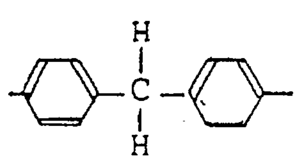,

and n is an integer.

In the above reaction sequence, the formula (I) represents recurring units of polyamido acids and the formula (II) represents recurring units of polyimides.

Specific and preferable examples of the polyamido acid include a soluble polyamido acid having

recurring units of the following formula (c) obtained by reaction betwen pyromellitic anhydride of the following formula (a) and diaminophenyl ether of the following formula (b)

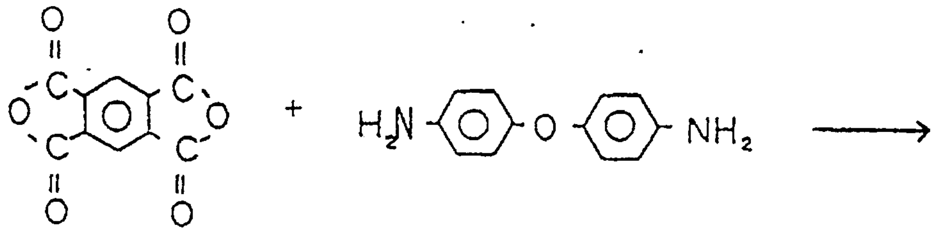

(a) (b)

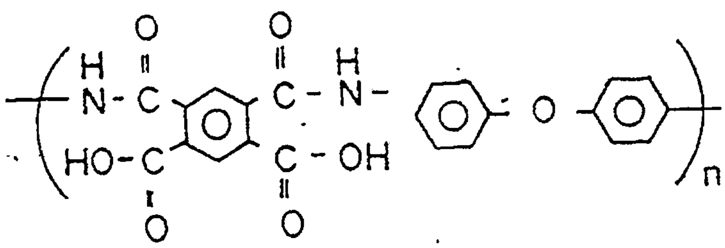

(c)

wherein n is an integer.

A solution of the polyamido acid in an organic solvent such as dimethylacetamide is cast on a substrate and dried to remove the solvent, thereby obtaining a polyamido acid film. The drying temperature may depend on the type of polyamido acid and is generally in the range of from 80 to 200° C. The film thickness is generally in the range of from 1 to 400 μ m. The film is removed from the substrate and subsequently subjected to stretching. The stretching may be monoaxial or biaxial. Preferably, biaxial stretching is used. The degree of stretching may depend on the thickness of the film and is generally in the range of from 5 to 30%, preferably from 10 to 30%. If the degree of stretching is smaller than 5%, the stretching effect is not significant. Over 30%, there is the tendency that the film is cracked.

After completion of the stretching, the film is heated so that thermal polycondensation reaction is caused to proceed for polyimidization. Alternatively, the film may be stretched during the course of the polycondensation reaction or prior to completion of the polyimidization. Accordingly, while the stretching is performed, the polyimidization may be effected. The temperature for the polyimidization is in the range of 350° C or below. By the heating, thermal dehydration takes place in the polyamido acid to provide a polyimide film of the following formula (d)

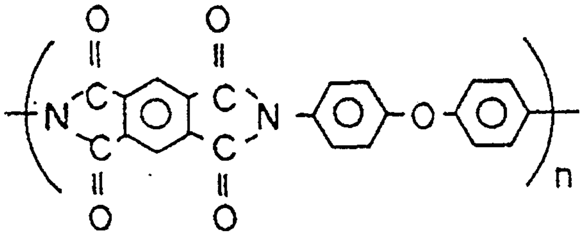

(d)

The resultant polyimide film is thermally treated in vacuum or in an inert gas such as $N_2$ or Ar at a

temperature of from 400 to 1000°C to obtain a carbonaceous film. Preferably, while pressing, the film is heated so that it is prevented from shrinkage along the film surface to obtain a carbonaceous film wherein molecular orientation proceeds satisfactorily.

The carbonaceous film is further thermally treated in an inert gas as mentioned above at a temperature of not lower than 1800°C, preferably not lower than 2500°C. In this case, the film should preferably be pressed at a pressure of not lower than 4 kg/cm$^2$, preferably not lower than 50 kg/cm$^2$. By the thermal treatment, a graphite sheet having no crack or wrinkle is obtained.

As will be seen from the above, the graphite sheet with good physical properties is readily obtained by stretching the starting polyamido acid preferably in a biaxial manner.

When a graphite block is obtained, the above steps except for the final thermal treatment for carbonization and graphitization are repeated to obtain a plurality of separate polyimide films. The plurality of the films are subjected to two stages of the thermal treatments as set out above,thereby obtaining a graphite block which has a high rocking characteristic suitable for X-ray monochromator. In this case, the thermal treatment for the graphitization should be effected at a pressure of not lower than 4 kg/cm$^2$, preferably not lower than 50 kg/cm$^2$.

It will be noted that the rocking characteristic is an index when graphite crystals are utilized as optical elements for X-rays and neutron rays. When graphite crystals are used as an optical element, the rocking characteristic should preferably be not larger than 3° for filters for neutron rays, not larger than 1° for monochromators for neutron rays. For monochromators for X-ray diffraction, the characteristic should be not larger than 0.5°. A graphite block having a rocking characteristic of not larger than 0.5° has been difficult to obtain. According to the process of the invention, such a block can be readily obtained in high yield.

The present invention is more particularly described by way of examples. Comparative examples are also described. In the following examples, graphite was evaluated with respect to lattice constant, electric conductivity and rocking characteristic. These characteristics were determined in the following manner.

(1) Lattice Constant ($C_0$)

The X-ray diffraction line of sample is measured by the CuK $\alpha$ ray using a Rikagaku Denki Model RU-200B X-ray diffractometer. The lattice constant is calculated from the (002) diffraction line which appears in the neighbourhood of 2 $\theta$ equal to 26 to 27° by the use of the following Bragg's equation:

$$n \lambda = 2d \sin \theta$$

where 2d is equal to $C_0$, n is equal to 2, and $\lambda$ is the wavelength of X-ray.

(2) Electric Conductivity (S/cm)

The sample is fitted with four-terminal electrodes by using silver paste and golden wires. The electric conductivity is determined by applying the electric current to the outer electrodes and measuring the voltage drop at the inner electrodes, and further determining the width, length and thickness of the sample through a microscope.

(3) Rocking Characteristic (°)

The rocking characteristic at the peak position of the (002) diffraction line of graphite is measured by the use of the same diffractometer as used to measure the lattice constant. The rocking characteristic is determined as the half-value width of the obtained absorption.

Examples 1 to 3

A polyamido acid solution (Torayniese), available from Toray Ltd.) was applied onto a glass substrate by a doctor blade method in a thickness of 250 $\mu$m and heated to a temperature of 120°C to remove the solvent therefrom thereby obtaining a polyamido acid film. The film was removed from the glass substrate and set in a stretching device (Polymer Stretcher, available from Shibayama Machine Manufacturing Co., Ltd.) and stretched at a temperature of 220°C to extents of 5% (Example 1), 10% (Example 2) and 20% (Example 3). Subsequently, each film was polycondensed for polyimidization at 350°C for 10 minutes to obtain a polyimide film. The resultant films had thicknesses of 33 $\mu$m (Example 1). 27 $\mu$m (Example 2) and 25 $\mu$m (Example 3).

The polyimide films were each thermally treated in an atmosphere of nitrogen at a heating rate of 20 °C/minute to a temperature of 1000 °C at which they were maintained for 1 hour to obtain carbonaceous films. The carbonaceous films were also each thermally treated by means of a hot press (G15X1 HT-B-GP-HP15, available from Chuugai Furnace Ind. Co., Ltd.) in an atmosphere of argon at a pressure of 200 kg/cm$^2$ at a heating rate of 20 °C/minute up to a temperature of 2800 °C at which they were maintained for 2 hours, thereby obtaining graphite films.

Comparative Example 1

The general procedure of Examples 1 to 3 was repeated except that the polyimide film was not stretched, thereby obtaining a graphite film. It will be noted that the polyimide film obtained had a thickness of 40 μm.

The graphite films obtained in the examples and comparative example were subjected to measurement of the lattice constant along the c axis and the electric conductivity. The results are shown in Table 1.

Table 1

| | Lattice Constant (angstroms) | Electric Conductivity (S/cm) |
|---|---|---|
| Example 1 | 6.802 | 4200 |
| Example 2 | 6.744 | 13400 |
| Example 3 | 6.708 | 26000 |
| Comp. Ex. 1 | 6.85 | 389 |

The graphite films of Examples 1 to 3 had lattice constants closer to the theoretical constant of 6.708 angstroms and higher electric conductivities than the film of Comparative Example. Thus, the graphitization is more effectively facilitated in the examples. Especially, when the degree of graphitization is 20%, very excellent results are obtained.

Examples 4 to 6

One hundred stretched polyimide films obtained in each of Examples 1 to 3 were built up (a degree of stretching of 5% in Example 4, a degree of stretching of 10% in Example 5, and a degree of stretching of 20% in Example 6). The films were thermally treated in an atmosphere of nitrogen at a pressure of 10 kg/cm$^2$ at a heating rate of 20 °C/minute up to a temperature of 1000 °C at which they were maintained for 1 hour for carbonization. After completion of the carbonization, the films were thermally treated by means of a hot press (G15X1 HT-B-GP-HP15, available from Chuugai Furnace Ind. Co., Ltd.) in an atmosphere of argon at a pressure of 200 kg/cm$^2$ at a heating rate of 20 °C/minute up to a temperature of 2800 °C at which they were maintained for 2 hours, thereby obtaining graphite blocks.

Comparative Example 2

The general procedure of Example 4 was repeated except that the films were not stretched, thereby obtaining a graphite block.

The graphite blocks obtained in the examples and comparative example were subjected to measurement of the lattice constant along the c axis and the rocking characteristic. The results are shown in Table 2.

Table 2

| | Lattice Constant (angstroms) | Rocking Characteristic (°) |
|---|---|---|
| Example 4 | 6.810 | 5.2 |
| Example 5 | 6.755 | 1.9 |
| Example 6 | 6.710 | 0.4 |
| Comp. Ex. 2 | 6.88 | - |

The graphite films of Examples 4 to 6 had lattice constants closer to the theoretical constant of 6.708 angstroms than that of comparative example. The rocking characteristic of the graphite blocks of Examples 5, 6 is excellent. With the degree of stretching of 20%, the rocking characteristic is remarkable as having not been experienced hitherto.

Example 7 to 11

The general procedure of Example 4 was repeated except that stretched polyimide films had a degree of stretching of 30% and the pressure during the hot pressing was 10 kg/cm$^2$ in Example 7, 50 kg/cm$^2$ in Example 8, 100 kg/cm$^2$ in Example 9, 200 kg/cm$^2$ in Example 10 and 400 kg/cm$^2$ in Example 11, thereby obtaining graphite blocks.

The results on the lattice constant and the rocking characteristic are shown in Table 3.

Table 3

| | Lattice Constant (angstroms) | Rocking Characteristic (°) |
|---|---|---|
| Example 7 | 6.715 | 3.3 |
| Example 8 | 6.711 | 2.1 |
| Example 9 | 6.710 | 1.2 |
| Example 10 | 6.708 | 0.4 |
| Example 11 | 6.708 | 0.35 |

The graphite blocks of Example 7 to 11 have the lattice constants close to the theoretical lattice constant of 6.708 angstroms. The graphite blocks of Example 8 to 11 are improved in the rocking characteristic. Especially, when the hot press pressure is 400 kg/cm$^2$ in Example 11, very excellent results are obtained.

A process for preparing a graphite sheet or block is described. The process comprises providing a film of a polyamido acid, subjecting the polyamido acid to polyimidization, stretching the film prior to or during the polyimidization, and thermally treating the resultant polyimide film under conditions sufficient for graphitization. When a plurality of the polyimide films are thermally treated for graphitization, a graphite block having a good rocking characteristic is obtained.

**Claims**

1. A process for preparing a graphite sheet which comprises:
   (a) providing a film of a polyamido acid;
   (b) subjecting the polyamido acid to polyimidization;
   (c) stretching the film before completion of the polyimidization; and
   (d) thermally treating the resultant polyimide film under conditions sufficient for graphitization to obtain a graphite sheet.

2. The process according to Claim 1, wherein the film of the polyamido acid is stretched prior to the polyimidization.

3. The process according to Claim 2, wherein said film is stretched biaxially.

4. The process according to Claim 1, wherein the film of the polyamido acid is stretched during the course of polyimidization reaction but before completion of the polyimidization reaction.

5. The process according to Claim 1, wherein teh film of said polyamido acid is stretched prior to the polyimidization reaction.

6. The process according to Claim 1, wherein said polyamido acid is an aromatic polyamido acid having recurring units of the following general formula

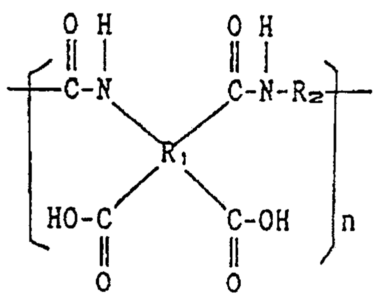

wherein $R_1$ represents 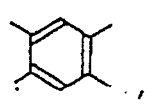, 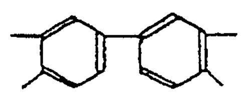, 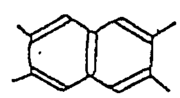 or 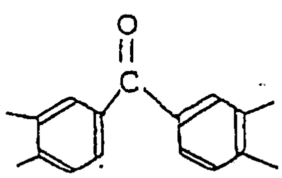, $R_2$ represents 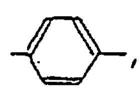, 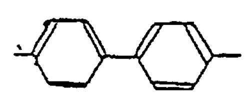, 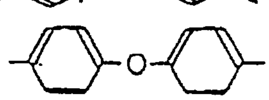 or 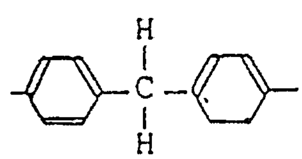,

and n is an integer.

7. The process according to Claim 6, wherein said polyamido acid has recurring units of the following formula

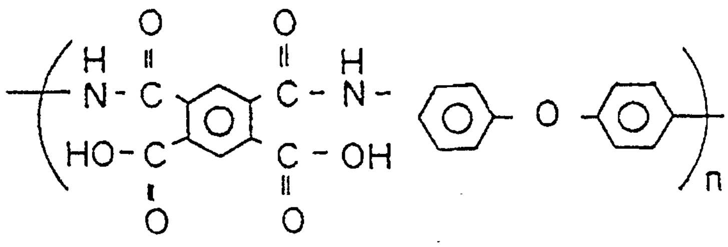

8. The process according to Claim 1, wherein the film is stretched to a degree of stretching of from 5 to 30%.

9. The process according to Claim 1, wherein the polyimidization is effected at a temperature of not higher than 350 °C.

10. The process according to Claim 1, wherein the thermal treatment for graphitization includes a first thermal treating step in an inert gas at a temperature of from 400 to 1000 °C for carbonization and a second thermal treating step in an inert atmosphere at a temperature of not lower than 1800 °C.

11. The process according to Claim 10, wherein the first thermal treating step is effected under a pressure to press the film.

12. The process according to Claim 10, wherein the second thermal treating step is effected to press the film at a pressure of not lower than 4 $kg/cm^2$ at a temperature of not lower than 2500 °C.

13. The process according to Claim 1, further comprising repeating the steps of (a) to (c) to obtain a plurality of separate polyimide films, and subjecting the plurality of separate polyimide films to thermal treatment under conditions sufficient for graphitization to obtain a graphite block.

14. The process according to Claim 13, wherein the thermal treatment for graphitization includes a first thermal treating step in an inert gas at a temperature of from 400 to 1000 °C for carbonization and a second thermal treating step in an inert atmosphere at a temperature of not lower than 1800 °C.

15. The process according to Claim 14, wherein the first thermal treating step is effected under a pressure to press the film.

16. The process according to Claim 14, wherein the second thermal treating step is effected to press the film at a pressure of not lower than 4 $kg/cm^2$ at a temperature of not lower than 2500 °C.